**Europäisches Patentamt**

**European Patent Office**

**Office européen des brevets**

(11) Veröffentlichungsnummer: **0 302 352 B1**

(12) **EUROPÄISCHE PATENTSCHRIFT**

(45) Veröffentlichungstag der Patentschrift: **27.12.91**

(51) Int. Cl.⁵: **C02F 1/58**, B01D 53/36

(21) Anmeldenummer: **88111975.4**

(22) Anmeldetag: **25.07.88**

(54) **Anordnung zur Entfernung von Ammoniumionen aus Abwässer.**

(30) Priorität: **03.08.87 DE 3725701**

(43) Veröffentlichungstag der Anmeldung:
**08.02.89 Patentblatt 89/06**

(45) Bekanntmachung des Hinweises auf die
Patenterteilung:
**27.12.91 Patentblatt 91/52**

(84) Benannte Vertragsstaaten:
**AT CH DE GB IT LI NL**

(56) Entgegenhaltungen:
**DE-A- 2 938 654**
**US-A- 3 546 078**

**JAPANESE PATENTS GAZETTE, "Section
chemical", Woche 8606, 19. März 1986, Derwent Publications Ltd, London, GB; & JP-
A-86 038 511 (MITSUBISHI HEAVY IND. K.K.)
19-12-1985**

(73) Patentinhaber: **SIEMENS AKTIENGESELL-
SCHAFT**
**Wittelsbacherplatz 2**
**W-8000 München 2(DE)**

(72) Erfinder: **Gabriel, Christian, Dipl.-Ing.**
**Flurstrasse 6**
**W-8521 Möhrendorf(DE)**
Erfinder: **Grünwald, Rudolf**
**Aubinger Strasse 91**
**W-8000 München 60(DE)**

Beschreibung

Die Erfindung bezieht sich auf eine Anordnung zur Entfernung von Ammoniak aus Abwasser.

In Gewerbe- und Industriebetrieben fällt häufig Abwasser an, das eine relativ hohe Konzentration von Ammoniumionen aufweist. Da die Grenzwerte für Ammoniak im Abwasser, das in öffentliche Gewässer abgeleitet werden soll, zur Erhaltung der Fischbestände sehr niedrig angesetzt sind, ist es erforderlich, den Gehalt an Ammoniak in einem solchen Abwasser zum Teil um mehrere Zehnerpotenzen zu verringern. Das gleiche gilt natürlich auch für das Abwasser von im Rauchgasstrom von Kraftwerken angeordneten Gasreinigungsanlagen.

Es ist bekannt, Ammoniumionen aus Wasser dadurch zu entfernen, daß man dem Wasser Laugen - insbesondere Natronlauge - zuführt, wobei sich das Kation der Lauge mit den Anionen im Wasser verbindet und Ammoniak freigesetzt wird. Diese Reaktion, die sich durch Aufwärmen des Abwassers stark beschleunigen läßt, läuft nach der folgenden Gleichung ab:

$$NH_4^+ + CL^- + NaOH \leftrightharpoons NaCl + NH_4^+ + OH^- = NaCl + H_2O + NH_3$$

Wegen der Giftigkeit des dabei freiwerdenden Ammoniaks und der damit verbundenen starken Geruchsbelästigung wird diese Reaktion nicht zur Entfernung von Ammoniak aus Abwasser angewendet.

Es ist bereits vorgeschlagen worden, das freiwerdende Ammoniakwasser durch Zugabe von Säuren in Ammoniumsalzen umzuwandeln. Hierzu ist jedoch ein zusätzlicher Aufwand für die zuzudosierende Säure und sind weitere Aufwendungen für die Anlagen und Entsorgung erforderlich.

Aus der US-PS-3 546 078 ist ein Verfahren zum Abtrennen von Ammoniak aus Abwasser bekannt, bei dem dem Abwasser eine Lauge zugemischt und das entstehende Gemisch einer Trennkolonne zugeführt wird. Der am Kopf der Trennkolonne abgezogene Ammoniakdampf wird abgekühlt und zur Bildung von Ammoniakwasser in einem Behälter mit Wasser gemischt. Ein Teil des am unteren Ende der Trennkolonne abgezogenen Abwassers wird erwärmt und anschließend in die Trennkolonne zurückgeführt.

Aus der DE-OS 29 38 654 ist auch ein Verfahren zur Vernichtung von Ammoniak in Abwassern bekannt, bei dem ammoniakhaltiger Dampf aus einem Ammoniak-Abtreiber zusammen mit Rauchgas aus einer Industrieanlage in einem $NO_x$-Reaktor einer katalytischen Redox-Reaktion unterworfen wird.

Der Erfindung liegt daher die Aufgabe zugrunde, einen Weg zu weisen, wie bei einer Anlage zur Abtrennung von Ammoniak aus Abwasser und Aufgabe des Ammoniaks in eine katalytische DeNO$_x$-Anlage Fremdenergie eingespart werden kann.

Diese Aufgabe wird durch die Merkmale des Anspruchs 1 gelöst. Weitere vorteilhafte Ausgestaltungen sind den Ansprüchen 2 bis 4 zu entnehmen.

Infolge der Zudosierung von Natronlauge zum ammoniumionenbeladenen Abwasser bildet sich das Salz der Natronlauge und Ammoniakwasser, welche in einer Destillationskolonne voneinander getrennt werden können. Das hat zur Folge, daß das abgezogene Abwasser Natriumchlorid-haltig ist und somit in seiner Toxidität deutlich vermindert ist. Darüber hinaus ist Natronlauge relativ preiswert. Während das salzhaltige Abwasser wegen der für die meisten Salze höheren Emissionsgrenzwerte leichter der Kanalisation zugeführt werden kann, braucht nunmehr das Ammoniakwasser nicht mehr chemisch weiter verarbeitet zu werden, sondern kann in der Kraftwerksanlage selbst dem Rauchgas als Reduktionsmittel für die Stickoxide unmittelbar zugeführt werden. Es substituiert dabei zugleich den Fremdbezug von Ammoniak.

Weitere Einzelheiten der Erfindung werden anhand eines in der FIG dargestellten Ausführungsbeispiels erläutert. Es zeigt:
die FIG eine schematische Darstellung der erfindungsgemäßen Anlage zur Entfernung von Ammoniumionen aus Abwässern.

In der schematischen Darstellung der Anlage erkennt man die Zuläufe 1 und 2 für das Abwasser und für die Natronlauge. Beide Zuläufe 1,2 münden in eine Mischstrecke 3, die über zwei Wärmetauscher 4,5 mit dem Eintrittsstutzen 6 einer Destillationskolonne 7 verbunden sind. Die Abzugsleitung 8 am Kopf der Destillationskolonne 7 führt durch den ersten Wärmetauscher 4 und einen Nachkühler 9 in einen Ammoniakwasserbehälter 10. Dieser Ammoniakwasserbehälter 10 ist über eine Dosierpumpe 11 an einer Eindüsvorrichtung 14 angeschlossen, die im Rauchgasstrom 12 einer Verbrennungsanlage einem Denox-Katalysator 13 vorgeschaltet ist. Die Abzugsleitung 15 am Sumpf der Destillationskolonne 7 führt über eine Abzugspumpe 16 durch den zweiten Wärmetauscher 5 und einen Nachkühler 17 zu einem hier nicht dargestellten Abwasserkanal. Die Abzugspumpe 16 speist zugleich auch eine Rücklaufleitung 18, die über einen dritten Wärmetauscher 19 in den Sumpf der Destillationskolonne 7 zurückführt. Dieser dritte Wärmetauscher 19 wird über ein Wärmetransportmedium 20 aufgeheizt. Das Wärmetransportmedium kann wahlweise Teil eines Warmwasser- bzw. Dampfkreislaufs oder auch unmittelbar das Rauchgas 12 einer Verbrennungsanlage sein, z.B. jenes, das den Denox-Katalysator 13 durchströmt hat.

Beim Betrieb der erfindungsgemäßen Anordnung wird über eine Einspeispumpe 21 Abwasser in die Mischstrecke 3 gepumpt. In hier nicht weiter dargestellter Weise wird in Abhängigkeit vom Gehalt an Ammoniumionen des Abwassers diesem Abwasser über die Dosierpumpe 22 Natronlauge in entsprechender Menge zugeführt.

In der Mischstrecke 3 werden das Abwasser und die Natronlauge vermischt und anschließend beim Durchströmen des ersten und des zweiten Wärmetauschers 4,5 vorgewärmt. Infolge der erhöhten Temperatur wird die eingangs geschilderte Reaktion beschleunigt und es tritt bereits in der Destillationskolonne eine Umsetzung zu Na-Salz und Ammoniakwasser ein. Infolge der über den dritten Wärmetauscher im unteren Bereich der Destillationskolonne eingetragenen Wärme und des so erzeugten Temperaturgradienten trennt sich dieses Gemisch auf in ein im Sumpf konzentriertes Abwasser und ein im Kopf der Kolonne konzentrierendes Ammoniakwasser. Während das Kopfprodukt über die Abzugsleitung 8 über den ersten Wärmetauscher 4 und den Nachkühler 9 in den Ammoniakwasserbehälter 10 befördert wird, wird das sich am unteren Ende der Kolonne ansammelnde Abwasser über die Abzugspumpe 16 abgezogen, teilweise wieder durch den dritten Wärmetauscher 19 gedrückt und aufgewärmt wieder in das untere Ende der Kolonne eingespeist, teilweise jedoch über den zweiten Wärmetauscher 5 und den Nachkühler 17 in den Abwasserkanal (nicht dargestellt) befördert. Die Menge des in den Abwasserkanal beförderten Abwassers wird über einen am unteren Ende der Destillationskolonne eingebenden Meßfüller 24 und ein Regulierventil 25 in der Abzugsleitung 15 gesteuert.

Der Inhalt des Ammoniakwasserbehälters 10 kann dort gespeichert und bedarfsweise über die Dosierpumpe 11 und die Eindüsvorrichtung 14 dem den Denox-Katalysator zuströmenden Rauchgas 12 beigemischt werden. Dabei verdampft das Ammoniakwasser und das Ammoniak wird frei. Es wirkt bei der anschließenden katalytischen Reduktion der Stickoxide in bekannter Weise als Reduktionsmittel. Reicht das so erzeugte Ammoniakwasser hierfür nicht aus, so kann der Ammoniakwasserbehälter 10 mit fremdbezogenem Ammoniakwasser über die Nachfülleitung 23 wieder aufgefüllt werden.

Es ist nun ein großer Vorteil dieser Anlage, daß das Ammoniakwasser nicht weiter behandelt werden muß, sondern unmittelbar über die Dosierpumpe 11 in das in die Denox-Katalysatoren 13 einströmende Rauchgas 12 eingedüst werden kann und das sonst hierfür einzukaufende Ammoniak substituiert. Weitere Betriebskosteneinsparungen lassen sich erreichen, wenn die fühlbare Wärme des dem Denox-Katalysatoren 13 entströmende Rauchgases zur Aufheizung des rezirkulierenden Abwassers im dritten Wärmetauscher 19 herangezogen wird.

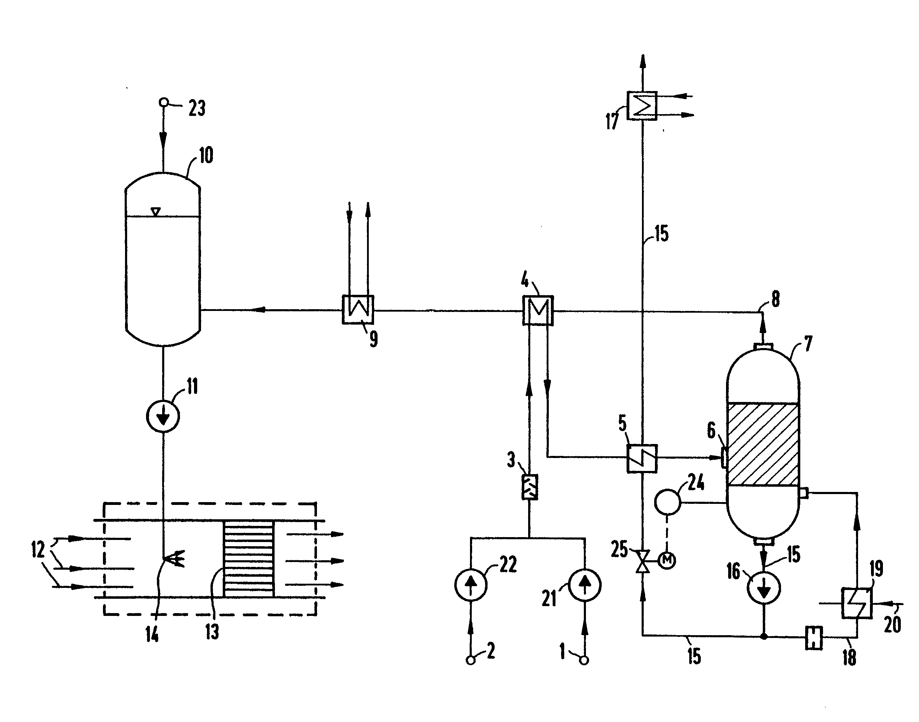

## Patentansprüche

1. Anordnung zur Entfernung von Ammoniak aus Abwasser,
   - wobei einer Mischstrecke (3) ein Zulauf (1) für das mit Ammoniak beladene Abwasser und ein über eine Dosierpumpe (22) geregelter Zulauf (2) für Natronlauge vorgeschaltet sind,
   - wobei die Mischstrecke (3) über Wärmetauscher (4, 5) an eine Destillationskolonne (7) angeschlossen ist, deren Abzugsleitung (8) für das Kopfprodukt an einen Ammoniakwasser-Lagerbehälter (10) und deren Abzugsleitung (15) für das Sumpfprodukt über eine pH-Regulierstufe an einen Abwasserkanal angeschlossen sind,
   - wobei die Wärmetauscher (4, 5) von dem abströmenden Kopfprodukt und dem abströmenden Sumpfprodukt der Destillationskolonne (7) beheizt sind, und
   - wobei der Ammoniakwasser-Lagerbehälter (10) über eine Dosierpumpe (11) eine Eindüsvorrichtung (14) speist, die in dem einer DeNox-Anlage (13, 14) zuströmenden Rauchgasstrom (12) angeordnet ist.

2. Anordnung nach Anspruch 1, wobei ein geschlossener Kreislauf vorgesehen ist, in dem ein Teil des abströmenden Sumpfproduktes der Destillationskolonne (7) über einen fremdbeheizten Wärmetauscher (19) in die Destillationskolonne (7) zurückgepumpt wird.

3. Anordnung nach Anspruch 2, dadurch gekennzeichnet, daß der fremdbeheizte Wärmetauscher (19) seine Wärme den Abgasen eines Erdgasbrenners entnimmt.

4. Anordnung nach Anspruch 2, dadurch gekennzeichnet, daß der fremdbeheizte Wärmetauscher (19) seine Wärme dem Rauchgasstrom (12) entnimmt.

## Claims

1. Apparatus for removing ammonia from waste water
   - wherein an inlet (1) for the waste water charged with ammonia and an inlet (2) for caustic soda regulated by means of a dosing pump (22) are connected in front of a mixing stage (3),
   - wherein the mixing stage (3) is connected by means of heat exchangers (4, 5) to a distillation column (7), whose discharge line (8) for the top product is connected to an ammonium hydroxide storage tank (10) and whose discharge line (15) for the bottom product is connected to a discharge water duct by means of a pH-regulating stage,

- wherein the heat exchangers (4, 5) are heated by the discharging top product and the discharging bottom product of the distillation column (7), and
- wherein the ammonium hydroxide storage tank (10) feeds a single nozzle device (14) by means of a dosing pump (11), this nozzle device being arranged in the flue gas stream (12) flowing to a DeNox plant (13, 14).

2. Apparatus according to claim 1, wherein a closed circuit is provided in which a part of the discharging bottom product of the distillation column (7) is pumped back into the distillation column (7) by means of a separately-heated heat exchanger (19).

3. Apparatus according to claim 2, characterised in that the separately-heated heat exchanger (19) takes its heat from the discharge gases of a natural gas burner.

4. Apparatus according to claim 2, characterised in that the separately-heated heat exchanger (19) takes its heat from the flue gas stream (12).

**Revendications**

1. Dispositif d'élimination d'ammoniac d'eau résiduaire, dans lequel,
   - un conduit d'arrivée (1) pour l'eau résiduaire chargée d'ammoniac et un conduit d'arrivée (2) de lessive de soude réglé par une pompe doseuse (22) sont montés en aval d'une zone de mélange (3),
   - la zone de mélange (3) est reliée par des échangeurs de chaleur (4, 5) à une colonne de distillation (7), dont le conduit d'évacuation (8) du produit de tête est relié à une cuve de stockage (10) d'eau ammoniacale et dont le conduit d'évacuation (15) du produit de queue est relié à un canal d'eau résiduaire par un étage de réglage du pH,
   - les échangeurs de chaleur (4, 5) sont chauffés par le produit de tête et par le produit de queue évacué de la colonne de distillation (7), et
   - la cuve de stockage (10) d'eau ammoniacale alimente, par une pompe doseuse (11), un dispositif de projection (14) qui est disposé dans le courant de gaz de fumée (12) allant à une installation De-Nox (13, 14).

2. Dispositif suivant la revendication 1, dans lequel il est prévu un circuit fermé dans lequel une partie du produit de queue soutiré de la colonne de distillation (7) est retournée par pompage à la colonne de distillation (7), en passant par un échangeur de chaleur (19) chauffé de l'extérieur.

3. Dispositif suivant la revendication 2, caractérisé en ce que l'échangeur de chaleur (19) chauffé de l'extérieur prélève sa chaleur de l'effluent gazeux d'un brûleur à gaz naturel.

4. Dispositif suivant la revendication 2, caractérisé en ce que l'échangeur de chaleur (19) chauffé de l'extérieur prélève sa chaleur du courant de gaz de fumée.